# EUROPÄISCHE PATENTSCHRIFT

(11) **EP 1 630 111 B1**
(45) Veröffentlichungstag und Bekanntmachung des Hinweises auf die Patenterteilung: **23.12.2009**
(21) Anmeldenummer: 05013562.3
(22) Anmeldetag: 23.06.2005
(51) Int. Cl.: B65G 1/06

(54) **Automatisiertes Bodenblocklager zur Aufnahme von auf Paletten positionierten Gütern**
Automated ground store for articles on pallets
Magasin de stockage automatisé au sol d'articles sur palettes

(30) Priorität: 25.08.2004 DE 102004041045
(43) Veröffentlichungstag der Anmeldung: 01.03.2006
(73) Patentinhaber: Fraunhofer-Gesellschaft zur Förderung der angewandten Forschung e.V., 80686 München (DE)
(72) Erfinder: Jungbluth, Volker, 63500 Seligenstadt (DE); Könemann, Matthias, 59394 Nordkirchen (DE); Kuhn, Markus, 44225 Dortmund (DE)
(74) Vertreter: Meinke, Dabringhaus und Partner GbR

(56) Entgegenhaltungen:
- WO-A-85/04638
- US-A- 3 986 605
- US-A- 4 248 563
- US-A- 4 279 583
- US-B1- 6 286 654

## Beschreibung

Die Erfindung richtet sich auf ein automatisiertes Bodenblocklager zur Aufnahme von in Behältern, in Gitterboxen, auf Paletten od. dgl. befindlichen Güter der im Oberbegriff des Anspruches 1 angegebenen Gattung, insbesondere zur Aufnahme mehrerer übereinandergestapelter, mit Gütern versehener Palettenverpackungseinheiten.

In der Güterlager- und -umschlagtechnik unter Zuhilfenahme von Paletten gibt es eine Reihe von Lösungen, die unterschiedliche Warenflüsse ermöglichen bzw. benötigen mit unterschiedlichem Platzbedarf und unterschiedlichen Handhabungsgeräten, wobei die US 3 986 605 oder die US 6 286 654 B gattungsgemäße Rollbahnen mit Schlittentrieb zeigen.

Aus der Fülle der bekannten Lösungen seien hier nur Fließlagersysteme als beispielsweise Palettendurchlauflager oder Paletteneinschublager genannt, Einfahrregale oder Durchfahrregale oder automatische Kanallagersysteme.

Eine weitere Lagertechnik stellt die sogenannte Bodenblocklagerung dar, wobei Güter übereinandergestapelt und einzelne Stapel zu einem Block zusammengefasst werden. Voraussetzung für diese Lagerart sind stapelbare Lagerhilfsmittel, wie beispielsweise Container, Gitterboxen od. dgl., wobei Bodenblocklager häufig so ausgeführt werden, dass einzelne Gänge und Gassen gebildet werden, um einen schnelleren Zugriff mittels Lagerfahrzeugen, etwa von Gabelstaplern, zu ermöglichen. Diese Lagerart eignet sich insbesondere für eine geringe Artikelzahl. Man ist bemüht, auch derartige Blocklager möglichst einer automatisierten Handhabungsweise zuzuführen oder diese dafür geeignet zu machen, wobei ein derartiges automatisiertes Blocklager in der EP 0 589 844 B1 beschrieben ist mit Mitteln zum Ein- und Auslagern von Lagergut, wobei dort allerdings auf eine gewisse Regaltechnik zurückgegriffen wird.

Aufgabe der Erfindung ist die Schaffung einer Lösung, mit der ein Bodenblocklager in einfacher Weise mit geringem technischen Aufwand und ohne besondere Regalkonstruktionen ausführbar und handhabbar ist.

Diese wird durch die Konstruktion nach Anspruch 1 gelöst.

Ein derartiger Flaschenzugseilantrieb hat den großen Vorteil, dass er in äußerst flacher Bauweise ausgeführt werden kann, er ist bedienungs- und wartungsfreundlich.

Mit einem derartigen Bodenblocklager lassen sich eine Reihe von Vorteilen gegenüber herkömmlichen Lösungen erreichen. So ermöglicht ein derartiges Bodenblocklager eine kompakte Lagerung mit hohem Volumennutzungsgrad bei flacher Bauweise, Reduzierung des Umlagerungsaufwandes insbesondere bei Einsatz einer "First-In-First-Out"-Strategie, Reduzierung von Personal durch Reduzierung des Suchaufwandes und Reduzierung der benötigten Fahrzeuge bei Eignung für alle herkömmlichen Ladehilfsmittel. Weitere Vorteile bestehen in der flexiblen Anpassbarkeit der Konstruktion an alle örtlichen Gegebenheiten und die modulare Erweiterungsmöglichkeit des Systemes, die Implementierbarkeit eines Lagerverwaltungssystemes sowie geringe Investitionskosten im Vergleich zu bisher bekannten Lösungen.

Weitere Ausgestaltungen ergeben sich aus den Unteransprüchen. Dabei kann es besonders zweckmäßig sein, wenn der Schlitten mit wenigstens einem federbelasteten, in Förderrichtung angehobenen Mitnehmer ausgerüstet ist, d.h. damit ist es möglich, den Schlitten ohne jegliches aktives, etwa von außen zu steuerndes Element auszurüsten, was aber nach der Erfindung selbstverständlich nicht ausgeschlossen ist.

Diese Ausgestaltung ermöglicht aber eine einfache, kostengünstige und wartungsarme Bauweise.

Eine, insbesondere aus Sicht des Stahlbaues gesehene, sehr einfache konstruktive Lösung und Ausgestaltung der Rollenbahn besteht darin, daß jede Rollenbahn von einem querschnittlich L-förmigen Profil gebildet wird mit einem dem Boden zugeordneten L-Schenkel, wobei im freien Randbereich des dem Boden zugeordneten L-Schenkels ein nach außen offenes C-Profil vorgesehen ist zur Aufnahme der Laufrollen des Förderschlittens und wobei die Rollen der Rollenbahn zwischen nach oben weisendem L-Schenkel und dem C-Steg des C-Profiles positioniert sind.

Vorteilhaft können die Rollenbahnen mit Sensoren insbesondere zur Überwachung des Füllzustandes einer Rollenbahn ausgerüstet sein, wie dies die Erfindung auch vorsieht.

Wird die oben erwähnte Klinkengestaltung des Mitnehmers gegen Federkraft eingesetzt, ist es zweckmäßig, die Rollenbahn mit das Rücklaufen von Paletten verhindernden Sperrklinken zu versehen, damit bei Rücklauf des Förderschlittens durch die von der Feder angehobenen Klinken nicht ein Rückrollen der Paletten erfolgt.

Um das Aufsetzen des Paletten in jeglicher Richtung zu ermöglichen, d.h. auch in Querrichtung, ist es zweckmäßig, jede Sperrklinke im Bereich ihrer Schwenkachse mit einer eigenen Laufrolle auszurüsten, was die Erfindung in Ausgestaltung ebenfalls vorsieht. Damit ist auch möglich, die Paletten nicht nur mit ihren Längskufen auf der Rollenbahn aufzusetzen, sondern mit den jeweiligen Stirnbereichen ihrer Längskufen.

Die Erfindung sieht auch vor, daß das Seil des Flaschenzuges beidseitig über Umlenkrollen am Schlitten und an den Stirnseiten der Rollenbahn geführt ist, wobei der Antriebsmotor an einer Stirnseite der Rollenbahn eine der Umlenkrollen antreibt, wobei insbesondere vorgesehen sein kann, daß über eine Kupplung unterschiedliche Umlenkrollen eines Umlenkrollenpaketes antreibbar sind.

Mit diesen erfindungsgemäßen Gestaltungen ist es beispielsweise möglich, die Fahrgeschwindigkeit des Schlittens zu verändern, etwa für einen schnellen Rücklauf und für einen langsamen Vorlauf zu sorgen, um nur ein Beispiel zu nennen.

Werden eine Mehrzahl von Verpackungseinheiten übereinander gestapelt, wie bei Blocklagern üblich, sieht die Erfindung aus Sicherheitsgründen vor, daß wenigstens die Entnahmeposition der Rollenbahn mit einer Stapel-Kippsicherung ausgerüstet ist und insbesondere, daß jede Rollenbahn am Eingang und am Ausgang mit einem Kippsicherungsgestell ausgerüstet ist, wobei ggf. Ein- und Ausgabesicherungsgestell in der Position einer oberen Ladeeinheit mit seitlichen Sicherungsdrahtseilen verbunden sind.

Mit derartigen Kippsicherungen kann verhindert werden, daß ein Palettenstapel etwa bei der Entnahmeposition nach vorne in Richtung auf das Manipulationsfahrzeug fällt oder aber in der einzelnen Rollenbahn sich seitlich versetzt oder seitlich kippt.

Weitere Vorteile, Einzelheiten und Merkmale der Erfindung ergeben sich aufgrund der nachfolgenden Beschreibung sowie anhand der Zeichnung. Diese zeigt in
- Fig. 1: ein allgemeines Prinzipbild eines grundsätzlichen Aufbaues eines erfindungsgemäßen Bodenblocklagers,

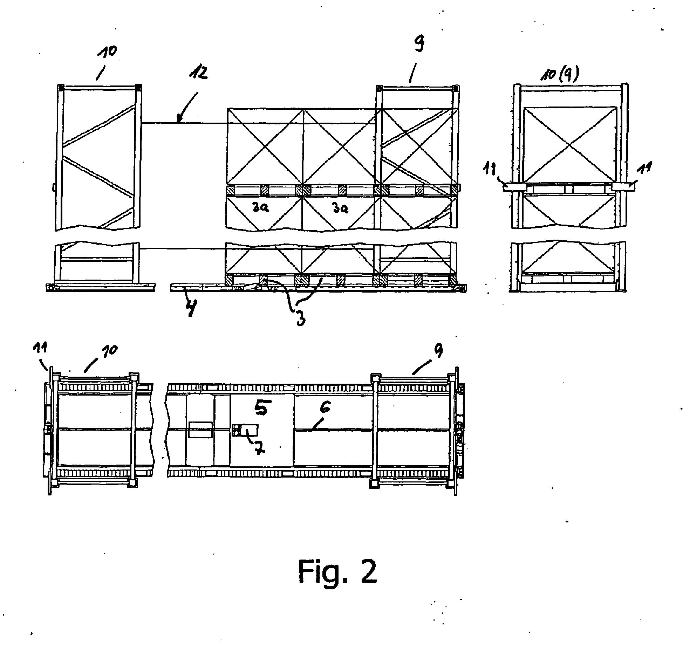

- Fig. 2: in Seiten-, Stirnseiten- und Aufsicht eine Lagerbahn eines Bodenblocklagers,
- Fig. 3 mit Fig. 3a: einen Querschnitt durch eine Rollenbahn mit Aufsicht auf eine Sperrklinke,
- Fig. 4: in Aufsicht die Stirnseiten einer Rollenbahn mit Antrieb,
- Fig. 5: die Seitenansicht auf eine Rollenbahn mit Seilführung,
- Fig. 6: eine Aufsicht auf ein Prinzipbild des Flaschenzugantriebes sowie in den
- Fig. 7 bis 11: Prinzipskizzen zur Steuerung einer Rollenbahn in unterschiedlichen Funktionspositionen.

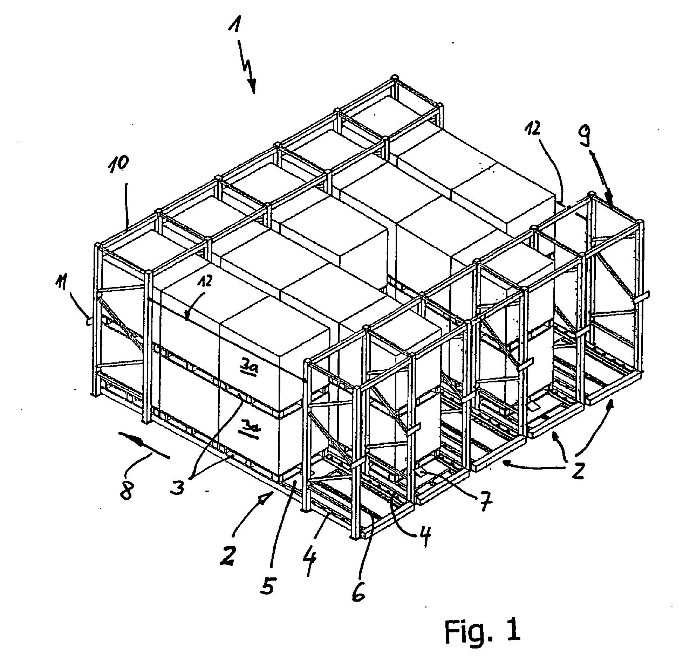

Das in den Figuren allgemein mit 1 bezeichnete Bodenblocklager besteht im Beispiel der Fig. 1 aus fünf mit 2 bezeichneten Lager- und Transportgassen mit je einem Paar zur Aufnahme von Paletten 3 ausgebildeten Rollenbahnen 4, wobei in Fig. 1 die auf den Paletten 3 positionierten Güter mit 3a bezeichnet sind.

Zwischen den Rollenbahnen 4 ist ein verfahrbarer Schlitten 5 positioniert, der über einen Antrieb, z.B. einen Seilzug 6, derart bewegt werden kann, daß er mit Hilfe einer federbelasteten Klinke 7, die sich an die Unterkante der Paletten 3 anlegen kann, die Paletten auf den Rollenbahnen verfahren kann, wobei in Fig. 1 die allgemeine Förderrichtung mit einem Pfeil 8 angegeben ist.

In Fig. 1 ist noch eine Möglichkeit dargestellt, die Palettenstapel 3, 3a am Ausfallen aus den Fördergassen zu hindern. Dazu sind Einlaufgestelle, mit 9 bezeichnet, und Auslaufgestelle, mit 10 bezeichnet, vorgesehen, die mit angedeuteten Sicherungselementen 11 im Ein- und Auslauf versehen sind und ggf. mit Sicherungsdrahtseilen 12 als Seitenführung.

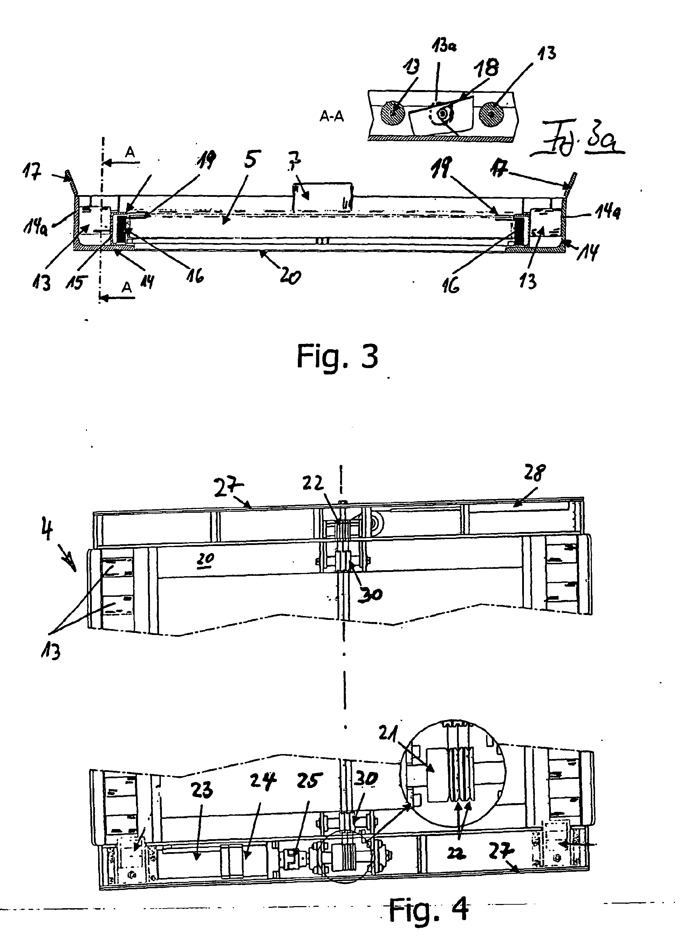

In den Fig. 3 und 4 ist die die Rollenbahn umfassende Stahlkonstruktion näher dargestellt. Für die Aufnahme der Tragrollen 13 ist ein L-Profil 14 vorgesehen, das auf seinem nach innen weisenden Schenkel ein nach innen offenes U-Profil 15 trägt, wobei die Tragrollen 13 zwischen dem nach oben weisenden L-Schenkel einereits und dem Steg des C-Profiles andererseits rollend angeordnet sind. Das nach innen offene C-Profil dient als Laufschiene für die Laufrollen 16 des allgemein mit 5 bezeichneten Förderschlittens mit seiner in Fig. 3 nach oben ausgestellten Förderklinke 7.

Insbesondere, um das Aufsetzen der in den Fig. 3 und 4 nicht wiedergegebenen Paletten zu erleichtern, können die freien, nach oben weisenden Schenkel der L-Profile mit Zentrierblechen 17 ausgerüstet sein.

Zwischen den Tragrollen 13 können Rücklaufbremsen in Form von federlasteten Klinken 18 vorgesehen sein, wie dies in Fig. 3a angedeutet ist, wobei auch die Drehwellen dieser Rücklaufsperrklinken 18 mit Tragrollen 13a versehen sein können, um auch Paletten quer zu ihrer eigentlichen Aufsetzposition verschieben zu können, die dann lediglich kurze Sockelberührungen mit den Tragrollen 13 aufweisen.

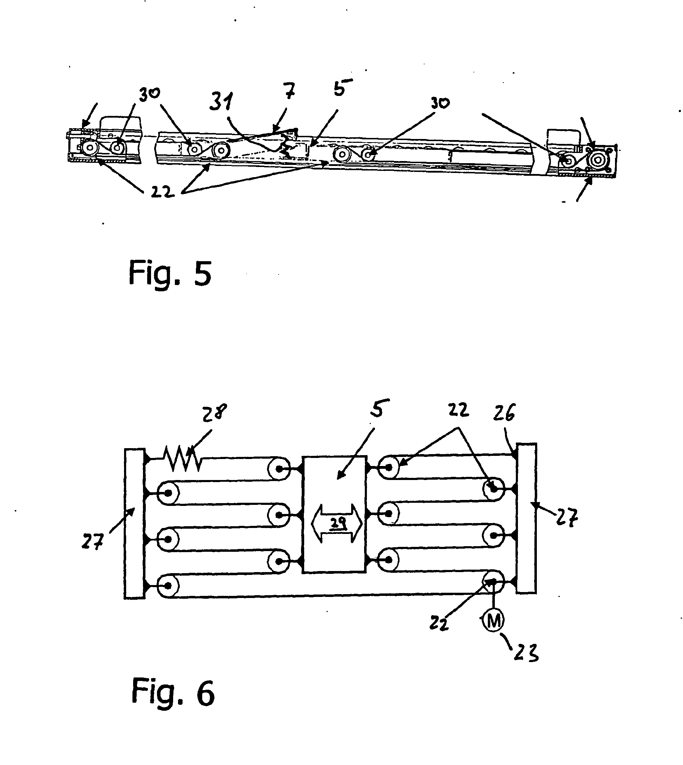

Der mittels eines Seilflaschenzuges (Fig. 6) bewegte Schlitten 5 kann zusätzlich noch mit Rillenkugellagern 19 ausgerüstet sein, die mit ihren Außenringen auf der oberen Kante des C-Profiles laufen. Zur Einhaltung der Abstände und zur Versteifung der Rollenbahnen sind in einigen Abständen zwischen den L-Profilen Querstreben 20 vorgesehen.

Zum Antrieb des Förderschlittens 5 mit der federbelasteten Schubklinke 7 ist ein im dargestellten Beispiel Sechsfach-Flaschenzug mit dem Seiltrieb 6 vorgesehen, wobei im dargestellten Beispiel über eine Treibscheibe 21 eines der Umlenkräder 22 für das Antriebsseil 6 mittels eines Elektromotores 23 angetrieben ist. Der Elektromotor 23 kann ein Untersetzungsgetriebe 24 aufweisen, wobei zusätzlich, wie in Fig. 4 angedeutet, eine Ausgleichskupplung 25 im Antriebstrang vorgesehen ist.

In den Fig. 5 und 6 ist eine Führung des Antriebseiles näher dargestellt, die den Schlitten 5 bewegt. Die Seilführung erfolgt dabei, wie sich insbesondere aus Fig. 6 ergibt, von einem Befestigungspunkt 26 an einer Stirnseite 27 (Fig. 6) über drei an den Stirnseiten fest positionierten Umlenkrollen und je drei am Schlitten fixierten Umlenkrollen 22 hin zu einem Ausgleich- und Federelement 28 an der anderen Stirnseite des Rollenbahnpaares. Durch die Antriebsbewegung des Motors 23 wird beispielsweise die erste stirnseitige Umlenkrolle 22 bewegt, wobei sich in Laufrichtung der Schlitten 5 gemäß Doppelpfeil 29 bewegt.

Die Seilführung ist dabei sehr kompakt, wobei das Seil selbst über jeweilige Niederhalterollen, mit 30 bezeichnet, kompakt in der Mitte zwischen den Rollenbahnen 4 geführt ist, wie sich dies insbesondere aus den Fig. 4 und 5 ergibt.

Erkennbar wird bei der Förderbewegung des Schlittens, beispielsweise in Fig. 5 nach links, der Schlitten unter einer Palette hindurchgezogen, wobei die Klinke 7 gegen die Kraft der mit 31 bezeichneten Druckfeder nach unten gedrückt wird, wobei die Klinke nach oben springt, sobald sie dazu einen Freiraum findet. Wird dann der Schlitten nach rechts bewegt und befindet sich vor der Klinke der untere Teil einer Palette, wird diese über die Rollenbahn in die Förderrichtung bewegt.

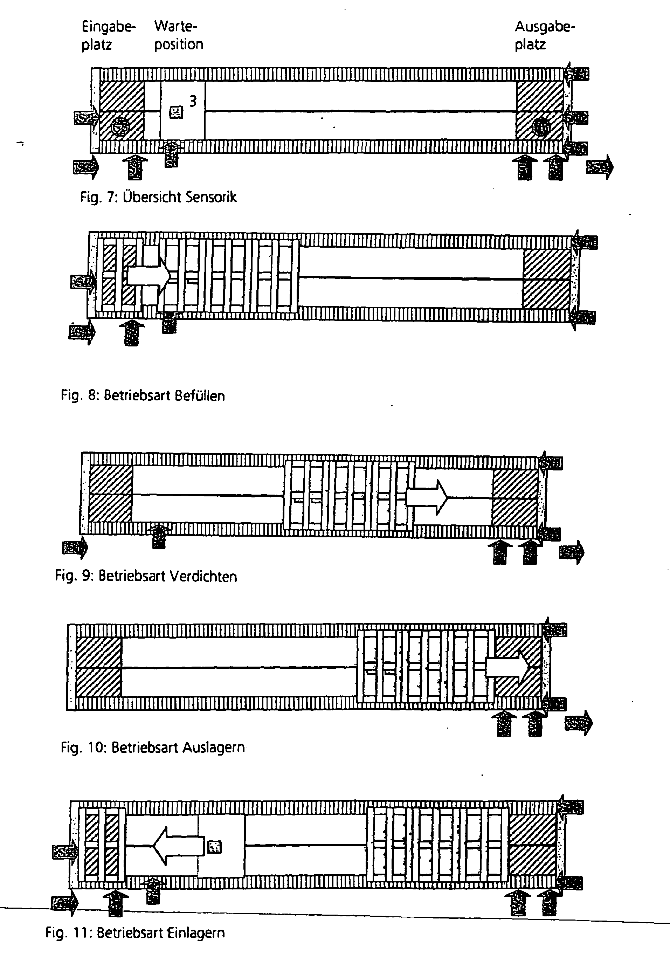

In der nachfolgenden Tabelle wird in bezug auf die Fig. 7 bis 11 die Sensorik wiedergegeben und die unterschiedlichen Betriebsarten:

| Nr. | Funktion | technische Ausführung | Verbauort |
|---|---|---|---|
| S1 | Betätigung Eingabe | Taster (Serie: Seilzugschalter oder Datenfunk) | Prototyp: Betätigungskasten "Flasche" |
| S2 | Endschalter Schlitten Eingabeseite | Induktivsensor | Bahnende, Eingabeseite vor Kopf |
| S3 | Belegtsensor Eingabeplatz | Lichttaster | Eingabeplatz, 50 mm vor Hinterkante Palette |
| S4 | Sensor Warteposition Schlitten | Induktivsensor | In C-Profil → tastet Laufrollen ab |
| S5/S6 | Sicherheitsabschaltung | Schaltmatte/ Sicherheitslichtschranke | Eingabe und Ausgabeseite |
| S7 | Paletten-Vorsensor, Umschalten auf Schleichfahrt | Lichttaster | Ausgabeseite, ca. 200 mm vor Bahnende |
| S8 | Palettensensor, Abschaltung Antrieb bei Verdichtung | Lichttaster | Ausgabeseite, ca. 30 mm vor Bahnende |
| S9 | Betätigung Ausgabe | Taster | Betätigungskasten "Flasche" |
| S10/S11 | Sensor "Bahn voll" | Induktivsensor + Mechanik | 2 x Puffer an Bahnende Ausgabe |
| S12 | Endschalter Schlitten Ausgabeseite | Induktivsensor | Bahnende, Ausgabeseite vor Kopf |

Bei dem Steuerungskonzept wird zunächst davon ausgegangen, daß die durch die Anlage ausgeführten Aktionen sowohl auf der Eingabeseite wie auch auf der Entnahmeseite manuell durch den Bediener (Staplerfahrer etc.) ausgelöst werden. Die Auslösung erfolgt in diesem Fall entweder stationär an der Anlage (durch Taster bzw. Seilzugschalter) oder mobil über Datenfunk. In Abhängigkeit von den jeweils vorherrschenden sicherheitstechnischen Randbedingungen wird eine automatische Auslösung der Auslagerungsfunktion beim "Freiräumen" des Auslagerplatzes angestrebt.

### Betriebsart Befüllen (Fig. 8):

Ausgelöst durch die Betätigung des Eingabeschalters unterfährt der Schlitten die neu eingelegten Palettenstapel und taktet jeweils um eine Palettenteilung vor. Die Palettenstapel stauen sich zu einer Reihe auf. Die Ausgangsposition des Schlittens ist die Warteposition, die sich eine Palelettenteilung hinter dem Eingabeplatz befindet. Die mit Induktivsensoren ausgerüsteten Anschlagpuffer S10 und S11 geben in dem Fall einer vollständig gefüllten Bahn das Signal zum Abbruch des Vorganges an die Steuerung.

Bedingung zur Auslösung der Aktion:
- S1 wird betätigt
- Schlitten befindet sich in Warteposition (S4 = 1)
- Palette auf Eingabefeld (S3 = 1)
- Bahn ist noch nicht voll (S10 = 0 und S11 =0)

### Aktion:

- Rückfahrt des Schlittens in Schleichfahrt (v = 0,05 m/s) bis S2 = 1
- Vorfahren in Schleichfahrt mit definierter Rampe bis S4 = 1 und S3 =0
- Falls S4 = 1 und S3 = 1 Fehlermeldung (in diesem Fall ist davon auszugehen, daß die Palette nicht vom Mitnehmer erfaßt worden ist)

Betriebsart Verdichten (Fig. 9):

Die zuvor eingelagerten Ladeeinheiten werden zusammen als Reihe bis zur Ausgabe vorgeschoben. Die Aktion wird nur ausgeführt, wenn der Ausgabeplatz nicht belegt ist. Dadurch kann der Antrieb bzw. die Vorwärtsbewegung der Paletten immer durch das Bedämpfen des Lichttasters S8 abgeschaltet werden. Befinden sich bereits Ladeeinheiten im Kanal, werden diese Zusammen mit den neu eingelagerten Einheiten verdichtet.

Bedingung zur Auslösung der Aktion:
- S1 wird zweimal kurz hintereinander betätigt oder S9 wird (einmal) betätigt
- Schlitten befindet sich in Warteposition (S4 = 1)
- Bahn ist noch nicht voll (S10 = 0 und S11 = 0)
- Ausgabeplatz ist leer (S7 = 0 und S8 = 0)
- Ausgabeplatz ist leer (S7 = 0 und S8 = 0)

Aktion:
- Beschleunigung des Schlitten mit kontrollierter Anfahrrampe
- Vorfahren in Schleichfahrt (v = 0,05 m/s) bis S7 = 1
- Vorfahren mit reduzierter Geschwindigkeit (ca. 0,02 m/s) bis S8 = 1, Motor abschalten

Betriebsart Auslagern (Fig. 10):

Der Schlitten befindet sich hier nicht in der Warteposition, sondern unter der letzten Palette der Reihe. Bei erneuter Betätigung von S9 wird jeweils um eine Palettenlänge vorgetaktet.

Bedingung zur Auslösung der Aktion:
- S9 wird betätigt
- Bahn ist noch nicht voll (S10 = 0 und S 11 = 0)
- Ausgabeplatz ist leer (S7 = 0 und S8 = 0)

Aktion:
- Beschleunigung des Schlittens mit kontrollierter Anfahrrampe
- Vorfahren in Schleichfahrt (v = 0,05 m/s) bis S 7=1
- Vorfahren mit reduzierter Geschwindigkeit (ca. 0,02 m/s) bis S8 = 1, Motor abschalten

Betriebsart Einlagern (Fig. 11):

Die Betriebsart Einlagern entspricht prinzipiell dem Befüllvorgang mit vorheriger Umschaltung der Betriebsarten. In der Ausgangsposition befindet sich der Schlitten unter der zuletzt eingelagerten Palette am Ende der Reihe. Von dort aus unterfährt er im (Eil-)Rückgang die neu eingelagerte Einheit, und taktet auf Anforderung des Bedieners jeweils um eine Palettenteilung vor.

Bedingung zur Auslösung der Aktion:
- S1 wird betätigt
- Bahn ist noch nicht voll (S10 = 0 und S11 = 0)
- Eingabe ist belegt (S3 = 1)

Aktion:
- Beschleunigung des Schlitten in Richtung Eingabe mit kontrollierter Anfahrrampe
- Rückfahrt in Eilgeschwindigkeit (v = 0,2 m/s), Umschalten durch S4 auf Schleichfahrt; Unterfahren der eingelagerten Palette bis S2 = 1
- Beschleunigung und Vorfahren in Schleichfahrt, bis S4 = 1 und S3 = 0

Geht die obige Beschreibung der Sensorik und der unterschiedlichen Betriebsarten davon aus, daß beispielsweise die Funktionen von einem Stapelfahrer ausgelöst werden, so kann die Erfindung auch für eine automatisierte Beschikkung und Entnahme eingesetzt werden. So kann beispielsweise ein Regalbedienungsgerät vorgesetzt sein, sowohl auf der Beschickungs- als auch auf der Entnahmeseite bei dem "FIFO" (First-in-First-Out)-Prinzip, wobei auch eine Beschickung und Entnahme von einem kopfseitigen Bedienungsgerät möglich ist. Nach dem dem LIFO-Prinzip ist es möglich, den Mitnehmer umzugestalten, derart, daß er die Paletten. Gitterboxen od. dgl. sowohl in die eine als auch in die andere Richtung fördern kann oder aber zwischen den Rollenbahnen werden zwei in unterschiedlichen Richtungen arbeitende Schlitten vorgesehen.

## Patentansprüche

1. Automatisiertes Bodenblocklager (1) zur Aufnahme von auf Paletten (3) od. dgl. befindlichen Gütern (3a), **gekennzeichnet durch** wenigstens ein Paar von passiven Rollenbahnen (4) zur Bewegung darauf aufgesetzter Paletten (3), und einem zwischen dem Rollenbahnpaar (3) verfahrbaren Schlitten (5) an einem Antrieb zur Bewegung der Paletten (3) wobei zum Verfahren des Schlittens (5) ein Seilantrieb (6) vorgesehen ist, wobei das Seil (6) als Flaschenzug zwischen den Stirnseiten (27) der Rollenbahn (4) einerseits und dem Schlitten (5) andererseits geführt ist.

2. Automatisiertes Bodenblocklager nach Anspruch 1,
**dadurch gekennzeichnet,**
**dass** der Schlitten (5) mit wenigstens einem federbelasteten, in Förderrichtung angehobenen Mitnehmer (7) ausgerüstet ist.

3. Automatisiertes Bodenblocklager nach Anspruch 1 oder 2,
**dadurch gekennzeichnet,**
**dass** jede Rollenbahn (4) von einem querschnittlich L-förmigen Profil (14) gebildet wird mit einem dem Boden zugeordneten L-Schenkel, wobei im freien Randbereich des dem Boden zugeordneten L-Schenkels ein nach aussen offenes C-Profil (15) vorgesehen ist zur Aufnahme der Laufrollen (16) des Förderschlittens (5) und wobei die Tragrollen (13) der Rollenbahn (4) zwischen nach oben weisendem L-Schenkel (14a) und dem C-Steg des C-Profiles (15) positioniert sind.

4. Automatisiertes Bodenblocklager nach einem der vorangehenden Ansprüche,
**dadurch gekennzeichnet,**
**dass** jede Rollenbahn (4) mit Sensoren insbesondere zur Überwachung des Füllzustandes einer Rollenbahn ausgerüstet ist.

5. Automatisiertes Bodenblocklager nach einem der vorangehenden Ansprüche,
**dadurch gekennzeichnet,**
**dass** die Rollenbahn (4) mit das Rücklaufen von Paletten verhindernden Sperrklinken (18) versehen ist.

6. Automatisiertes Bodenblocklager nach Anspruch 5,
**dadurch gekennzeichnet,**
**dass** jede Sperrklinke (18) im Bereich ihrer Schwenkachse mit einer eigenen Tragrolle (13a) versehen ist.

7. Automatisiertes Bodenblocklager nach einem der vorangehenden Ansprüche,
**dadurch gekennzeichnet,**
**dass** das Seil (6) des Flaschenzuges beidseitig über Umlenkrollen (22) am Schlitten (5) und an den Stirnseiten (27) der Rollenbahn geführt ist, wobei der Antriebsmotor (23) an einer Stirnseite der Rollenbahn eine der Umlenkrollen (22) antreibt.

8. Automatisiertes Bodenblocklager nach Anspruch 7,
**dadurch gekennzeichnet,**
**dass** über eine Kupplung unterschiedliche Umlenkrollen (22) eines Umlenkrollenpaketes antreibbar sind.

9. Automatisiertes Bodenblocklager nach einem der vorangehenden Ansprüche,
**dadurch gekennzeichnet,**
**dass** wenigstens die Entnahmeposition der Rollenbahn mit einer Stapel-Kippsicherung (11) ausgerüstet ist.

10. Automatisiertes Bodenblocklager nach einem der vorangehenden Ansprüche,
**dadurch gekennzeichnet,**
**dass** jede Rollenbahn (8) am Eingang und am Ausgang mit einem Kippsicherungsgestell (9,10) ausgerüstet ist, wobei ggf. Ein- und Ausgabesicherungsgestell (9,10) in der Position einer oberen Ladeeinheit (3,3a) mit seitlichen Sicherungsdrahtseilen (12) verbunden sind.

## Claims

1. Automated ground block store (1) for accommodating goods (3a) on pallets (3) or the like, **characterised by** at least one pair of passive roller tracks (4) for the movement of pallets (3) placed thereon, and a carriage (5) displaceable between the pair of roller tracks (4) on a drive for movement of the pallets (3), wherein there is provided a cable drive (6) for displacement of the carriage (5), wherein the cable (6) is in the form of a block and tackle arrangement between the ends (27) of the roller track (4) on the one hand and the carriage (5) on the other hand.

2. Automated ground block store according to claim 1 **characterised in that** the carriage (5) is equipped with at least one spring-loaded entrainment member (7) lifted in the conveyor direction.

3. Automated ground block store according to claim 1 or claim 2 **characterised in that** each roller track (4) is formed by a profile member (14) which is L-shaped in cross-section and which has a limb of the L associated with the ground, wherein provided in the free edge region of the L limb associated with the ground is an outwardly open C-shaped profile member (15) for accommodating the travel rollers (16) of the conveyor carriage (5) and wherein the carrier rollers (13) of the roller track (4) are positioned between the upwardly facing L limb (14a) and the C-web of the C-shaped profile member (15).

4. Automated ground block store according to one of the preceding claims **characterised in that** each roller track (4) is provided with sensors in particular for monitoring the filling condition of a roller track.

5. Automated ground block store according to one of the preceding claims **characterised in that** the roller track (4) is provided with locking pawls (18) to prevent pallets from running back.

6. Automated ground block store according to claim 5 **characterised in that** each locking pawl (18) is provided in the region of its pivot axis with its own carrier roller (13a).

7. Automated ground block store according to one of the preceding claims **characterised in that** the cable (6) of the block and tackle arrangement is guided on both sides by way of direction-changing rollers (22) on the carriage (5) and at the ends (27) of the roller track, wherein the drive motor (23) at one end of the roller track drives one of the direction-changing rollers (22).

8. Automated ground block store according to claim 7 **characterised in that** different direction-changing rollers (22) of an array of direction-changing rollers are drivable by way of a clutch.

9. Automated ground block store according to one of the preceding claims **characterised in that** at least the removal position of the roller track is equipped with a stack anti-tilt means (11).

10. Automated ground block store according to one of the preceding claims **characterised in that** each roller track (8) is equipped at the entry and at the exit with an anti-tilt frame (9, 10), wherein optionally entry and exit anti-tilt frames (9, 10) are connected in the position of an upper loading unit (3, 3a) with lateral securing wire cables (12).

## Revendications

1. Magasin de stockage automatisé au sol (1) pour recevoir des produits (3a) qui se trouvent sur des palettes (3) ou similaires,
**caractérisé par** une paire de voies à rouleaux passives (4) pour le déplacement de palettes (3) posées sur celles-ci, et un chariot (5) déplaçable entre la paire de voies à rouleaux (3) sur un entraînement pour déplacer les palettes (3), dans lequel il est prévu un entraînement à câble (6) pour le déplacement du chariot (5), le câble étant guidé, sous la forme d'un palan, entre les faces frontales (27) de la voie à rouleaux (4) d'une part et le chariot (5) d'autre part.

2. Magasin de stockage automatisé au sol selon la revendication 1,
**caractérisé en ce que** le chariot (5) est équipé d'au moins un élément d'entraînement (7) chargé par un ressort et soulevé en direction de convoyage.

3. Magasin de stockage automatisé au sol selon la revendication 1 ou 2, **caractérisé en ce que** chaque voie à rouleaux (4) est formée par un profilé (14) à section transversale en forme de L, avec une branche du L associée au sol, et dans la zone de bordure libre de la branche du L associée au sol est prévu un profilé (15) en forme de C ouvert vers l'extérieur pour recevoir les galets de roulement (16) du chariot de convoyage (5), et les rouleaux porteurs (13) de la voie à rouleaux (4) sont positionnés entre la branche du L (14a) dirigée vers le haut et le dos du profilé en C (15).

4. Magasin de stockage automatisé au sol selon l'une des revendications précédentes,
**caractérisé en ce que** chaque voie à rouleaux (4) est équipée de capteurs, en particulier pour surveiller l'état de remplissage d'une voie à rouleaux.

5. Magasin de stockage automatisé au sol selon l'une des revendications précédentes,
**caractérisé en ce que** la voie à rouleaux (4) est pourvue de loquets de blocage (18) qui empêchent un retour des palettes en arrière.

6. Magasin de stockage automatisé au sol selon la revendication 5,
**caractérisé en ce que** chaque loquet de blocage (18) est pourvu d'un propre galet porteur (13a) dans la région de son axe de pivotement.

7. Magasin de stockage automatisé au sol selon l'une des revendications précédentes,
**caractérisé en ce que** le câble (6) du palan est guidé des deux côtés via des poulies de renvoi (22) sur le chariot (5) et au niveau des faces frontales (27) de la voie à rouleaux, et le moteur d'entraînement (23) au niveau d'un côté frontal de la voie à rouleaux entraîne l'une des poulies de renvoi (22).

8. Magasin de stockage automatisé au sol selon la revendication 7,
**caractérisé en ce que** différentes poulies de renvoi (22) d'un empilement de poulies de renvoi peuvent être entraînées via un accouplement.

9. Magasin de stockage automatisé au sol selon l'une des revendications précédentes,
**caractérisé en ce que** la position d'enlèvement de la voie à rouleaux au moins est équipée d'un dispositif (11) empêchant le basculement d'un empilement.

10. Magasin de stockage automatisé au sol selon l'une des revendications précédentes,
**caractérisé en ce que** chaque voie à rouleaux (8) est équipée, à l'entrée et à la sortie, d'un châssis (9, 10) empêchant le basculement, et un châssis de sécurité à l'introduction et à la sortie (9, 10) dans la position d'une unité de chargement supérieure (3, 3a) sont reliés à des câbles de sécurités latéraux (12).
